(19) **Europäisches Patentamt**
**European Patent Office**
**Office européen des brevets**

(11) Veröffentlichungsnummer : **0 344 765 B1**

(12) **EUROPÄISCHE PATENTSCHRIFT**

(45) Veröffentlichungstag der Patentschrift :
**27.12.91 Patentblatt 91/52**

(51) Int. Cl.$^5$ : **B29C 43/56**

(21) Anmeldenummer : **89109888.1**

(22) Anmeldetag : **01.06.89**

(54) **Verfahren und Anordnung zum Verkleben flächiger Werkstücke.**

(30) Priorität : **03.06.88 DE 3819027**

(43) Veröffentlichungstag der Anmeldung :
**06.12.89 Patentblatt 89/49**

(45) Bekanntmachung des Hinweises auf die
Patenterteilung :
**27.12.91 Patentblatt 91/52**

(84) Benannte Vertragsstaaten :
**AT CH DE FR GB IT LI**

(56) Entgegenhaltungen :
**DE-A- 2 803 521**
**DE-B- 1 146 242**
**DE-C- 823 088**
**FR-A- 2 214 716**

(73) Patentinhaber : **Herbert Meyer GmbH & Co. KG**
**Bayerwaldstrasse 29**
**W-8000 München 83 (DE)**

(72) Erfinder : **Meyer, Werner**
**Geisenbrunnerstrasse 57**
**W-8000 München 71 (DE)**

(74) Vertreter : **Jähne, Albrecht, Dipl.-Ing.**
**Buchenstrasse 5**
**W-8021 Baierbrunn (DE)**

## Beschreibung

Die Erfindung bezieht sich auf ein Verfahren zum gegenseitigen Verkleben von flächenförmigen Werkstücken, wie Textilien, Schaumstoffe, Kunststoffolien und dergleichen, bei dem wenigstens zwei gleichzeitig miteinander zu verklebende Werkstücke, die unter Verwendung eines Klebers als Zwischenschicht zwischen zwei Förderbändern verfahrbar übereinander abgelegt sind, zunächst bis zum Schmelzen des Klebers, gegebenenfalls in Verbindung mit einem Vorpreßvorgang, erwärmt, sodann mit Abschluß des Erwärmungsvorganges einem die gegenseitige Verklebung der Werkstücke herbeiführenden Preßvorgang unterzogen und schließlich abgekühlt werden, sowie eine Anordnung zur Durchführung des Verfahrens entsprechend den Merkmalen des Oberbegriffs des Anspruchs 5.

Verfahren dieser Art können mit Anordnungen sowohl für einen diskontinuierlichen als auch für einen kontinuierlichen. Betrieb durchgeführt werden Eine Anordnung für diskontinuierlichen Betrieb ist beispielsweise durch die DE-G-6941387 bekannt. Die miteinander zu verklebenden Werkstücke, von denen das eine Werkstück eine Kleberseite hat und mit der Kleberseite auf das andere hiermit zu verklebende Werkstück aufgelegt ist, werden zwischen zwei Förderbändern in eine Presse mit beheizten Preßplatten gefahren und dort einem Wärme-Preßvorgang unterzogen. Anschließend werden die miteinander verklebten Werkstücke auf dem unteren Förderband zu einer Abnahmestelle weiter transportiert.

Eine Anordnung, die von dem einleitend erwähnten Verfahren ebenfalls Gebrauch macht aber kontinuierlich arbeitet, ist beispielsweise durch die DE 2648724 C2 bekannt. Die miteinander zu verklebenden, auf einer Auflegestation übereinander abgelegten Werkstücke werden hier zunächst zwischen zwei Förderbändern durch eine Heizzone hindurchgeführt, die aus in geringem Abstand übereinander angeordneten beheizten Platten besteht und im Anschluß an ihre so durchgeführte ausreichende Erwärmung beim Durchgang durch ein Preßwalzenpaar miteinander verklebt. Sodann werden die nunmehr miteinander verklebten Werkstücke zu einer Abnahmestation weiter transportiert, die hierbei zu einer Kühlzone erweitert ist.

Anordnungen, die von dem einleitend beschriebenen Verfahren Gebrauch machen und kontinuierlich arbeiten, eignen sich nicht nur für das gegenseitige Verkleben von Zuschnitten, wie das bei der Konfektionsherstellung der Fall ist, sondern können auch als Kaschiermaschinen zum gegenseitigen Verkleben von Rollenware verwendet werden. Nur beispielsweise wird in diesem Zusammenhang auf die gattungsbildende DE-B-1504342 hingewiesen.

Als Kleber zur gegenseitigen Verbindung der miteinander zu fixierenden oder zu kaschierenden Werkstücke werden Schmelzkleber in Punkt-, Folien- oder Pulverform verwendet. Schmelzkleber in Punkt- oder Pulverform sind dabei zweckmäßig vorab auf der Klebeseite eines der miteinander zu verklebenden Werkstücke haftend aufgebracht.

Die Förderbänder sind überlicherweise luftundurchlässige, mit Teflon beschichtete Glas- oder Kevlargewebebänder, die eine geringe Haftreibung aufweisen und darüberhinaus sich auch leicht von bei den Verklebevorgängen mitunter auftretenden Klebstoffdurchschlägen reinigen lassen.

Für einen einwandfreien Betrieb solcher Fixierbzw. Kaschiervorrichtungen ist es wesentlich, während des Durchgangs der Förderbänder durch die Heiz-Preßzone einen guten und gleichmäßigen Wärmeübergang auf die miteinander zu verklebenden Werkstücke zu gewährleisten. Ist diese Voraussetzung nicht gegeben, mangelt es an einer gleichmäßigen Erwärung des Schmelzklebers, der nur bei der jeweils vorgegebenen Verarbeitungstemperatur die geforderte Haftfestigkeit garantiert.

Die mit solchen Schmelzklebern erreichbare Haftfestigkeit ist aber nicht nur von einem gleichmäßigen Wärmeübergang bei der Erwärmung der miteinander zu verklebenden Werkstücke vor ihrem Pressen abhängig. Es ist auch wichtig, daß der Wärmeentzug nach dem Preßvorgang der miteinander zu verklebenden Werkstücke auf der zu einer Kühlzone erweiterten Abnahmestation schnell und über die ganze Werkstückfläche hinweg gleichmäßig erfolgt. Der schnelle Abkühlungsprozeß und die kontrollierte Ableitung der in den Materialien angestauten Wärmeenergie ist notwendig, um einerseits den Kristallisationsprozeß des Schmelzklebers schnell einzuleiten und andererseits eine möglichst gleichmäßige kristalline Struktur des wieder erstarrenden Schmelzklebers zu erhalten. Die erzielbare Haftfestigkeit des Schmelzklebers hängt nämlich sehr stark davon ab, wie gleichmäßig die Kristallbildung während des Erstarrungsprozesses erfolgt.

Eine gleichmäßige Aufheizung der miteinander zu verklebenden Werkstücke und deren schneller gleichmäßiger Wärmeentzug im Anschluß an den Preßvorgang läßt sich bisher bei zahlreichen Anwendungsfällen nicht in zufriedenstellender Weise erreichen. Besonders schwierig gestalten sich die Verhältnisse dann, wenn von einer sogenannten Sandwichverarbeitung von zugeschnittenen Bekleidungsteilen Gebrauch gemacht wird, bei der zwei Einlagen und zwei Oberstoffteile zu einem vierlagigen Werkstückstapel übereinander gelegt und in dieser Form zwischen zwei Förderbändern durch die Heiz-Preßzone hindurchgeführt werden. Das Ergebnis ist dann eine nicht gleichmäßig gute Verklebung der miteinander fixierten Werkstücke über ihre Fläche hinweg, wodurch die zu fordernde Festigkeit und Dauerhaftigkeit der Klebeverbindung unzureichend oder zumindest in Frage gestellt ist.

Der Erfindung liegt die Aufgabe zugrunde, für das Verkleben von flächigen Werkstücken eine weitere Lösung anzugeben, die die hierbei auftretenden geschilderten Mängel vermeidet und praktisch auch bei der Bearbeitung unterschiedlichster Materialien anwendbar ist.

Ausgehend von einem Verfahren und dessen Durchführung in Verbindung mit Fixier- bzw. Kaschiervorrichtungen wird diese Aufgabe gemäß der Erfindung durch die im Patentanspruch 1 angegebenen Merkmale gelöst.

Der Erfindung liegt die Erkenntnis zugrunde, daß die ungleichmäßige Wärmezu- und -abfuhr im Zuge der gegenseitigen Verklebung von Werkstücken durch Luft- und Dampfeinschlüsse in Form von Blasen verursacht wird. Diese Luft- und Dampfeinschlüsse setzen am Ort ihres Auftretens die Wärmeleitfähigkeit herab, mit der Folge, daß an diesen Stellen der dann unzureichend erwärmte Schmelzkleber die zu fordernde gegenseitige Haftung der miteinander zu verklebenden Werkstücke nicht gewährleisten kann.

Dieser Effekt tritt dabei um so gravierender auf, je geringer die Verarbeitungstemperatur des verwendeten Schmelzklebers ist. Die derzeit verwendeten Schmelzkleber haben in der Regel eine Verarbeitungstemperatur um 120 Grad Celsius. Diese niedrige Verarbeitungstemperatur schont die zu verarbeitenden Materialien und ist daher wünschenswert. Je niedriger jedoch die Verarbeitungstemperatur eines Schmelzklebers liegt, um so eher ergibt sich eine unterschiedliche Haftung über die Fläche der miteinander zu verklebenden Werkstücke bei Abweichungen von dieser Verarbeitungstemperatur im Zeitpunkt des Preßvorgangs.

Durch das erfindungsgemäße Erzeugen eines Teilvakuums in dem die zu bearbeitenden Werkstücke enthaltenden Zwischenraum zwischen den beiden Förderbändern beim Durchgang der Werkstücke durch die Heiz- Preßzone und/oder die Kühlzone werden diese Luft- und Dampfeinschlüsse zwischen den Werkstücken abgesaugt und damit die die unterschiedliche Haftung der miteinander zu verklebenden Werkstücke über ihre Fläche hinweg bewirkende Ursache beseitigt.

Zweckmäßige Ausgestaltungen des Verfahrens nach dem Patentanspruch 1 sind in den weiteren Verfahrensansprüchen 2 bis 4 angegeben.

Eine bevorzugte Anordnung zur Durchführung des Verfahrens nach den Patentansprüchen 1 bis 4 ist im Patentanspruch 5 gegeben.

Wie umfangreiche der Erfindung zugrundeliegende Untersuchungen ergeben haben, kann das Absaugen der Luft- und Dampfeinschlüsse in den miteinander zu verklebenden Werkstücken in außerordentlich einfacher Weise dadurch herbeigeführt werden, daß die beiden Förderbänder im Bereich der Heiz-Preßzone und/oder Kühlzone wenigstens auf einer Seite zwischen den Dichtleisten einer rinnenförmigen Absaugdüse geführt werden, die an eine Luftabsaugeinrichtung angeschlossen ist.

Zweckmäßige Ausführungen der Anordnung nach Patentanspruch 5 sind in den weiteren Anordnungsansprüchen 6 bis 9 angegeben.

In der Zeichnung, durch die anhand eines dargestellten Ausführungsbeispiels die Erfindung noch näher erläutert wird, bedeuten

Fig. 1 die schematische Darstellung einer kontinuierlich arbeitenden Anordnung zum Fixieren bzw. Kaschieren von Werkstücken, bei der die Werkstücke zwischen zwei Förderbändern durch die Heiz-Preßzone und die Kühlzone hindurchgeführt werden.

Fig. 2 eine perspektivische Teildarstellung der Absaugeinrichtung für den Zwischenraum zwischen den beiden Förderbändern bei der Anordnung nach Fig. 1.

Fig. 3 der Schnitt III/III im Bereich der Heiz- Preßzone bei der Anordnung nach Fig. 1.

Fig. 4 der Schnitt IV/IV im Bereich der Kühlzone bei der Anordnung nach Fig. 1.

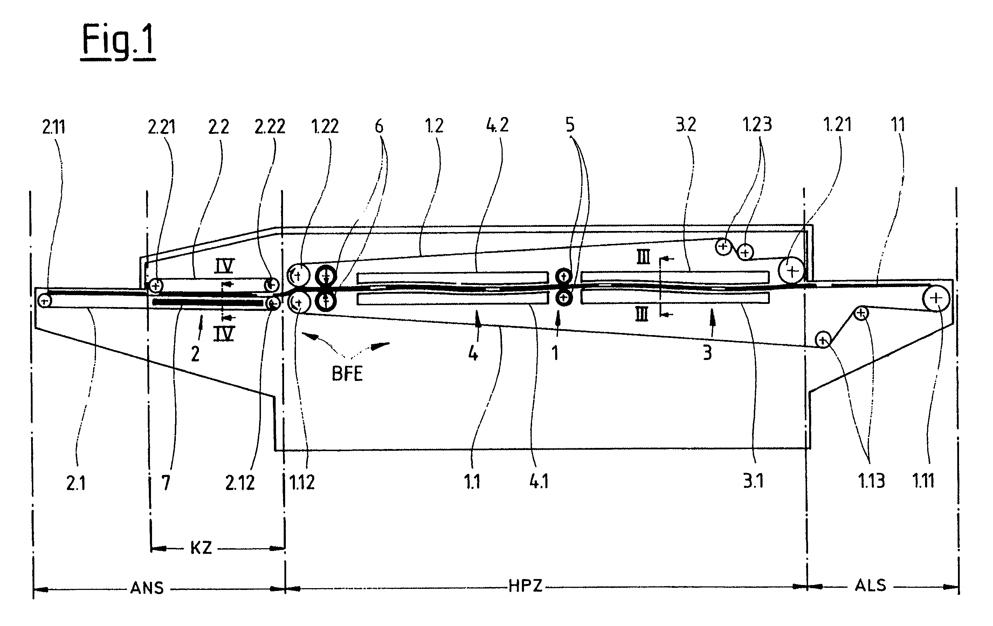

Die in Fig. 1 in schematischer Darstellung gezeigte Anordnung zum gegenseitigen Verkleben von flächenförmigen Werkstücken besteht auf der rechten Seite aus einer Auflegestation ALS für die Zuführung der miteinander zu verklebenden Werkstücke 11 an eine sich nach links hieran anschließende Heiz-Preßzone HPZ. An die Heiz-Preßzone HPZ schließt sich dann nach links eine zu einer Kühlzone KZ erweiterte Abnahmestation ANS an.

Die von einer kontinuierlichen Arbeitsweise gebrauchmachende Anordnung nach Fig. 1 weist zum Transport der zu bearbeitenden Werkstücke von der Auflegestation ALS durch die Heiz-Preßzone HPZ hindurch zur Abnahmestation ANS eine Bandfördereinrichtung BFE auf, die aus zwei Förderbandanordnungen 1 und 2 besteht. Die erste Förderbandanordnung 1 hat ein unteres Förderband 1.1, das über die Länge der Heiz-Preßzone HPZ und der Auflegestation ALS umläuft und auf das auf seiten der Auflegestation ALS die miteinander zu verklebenden Werkstücke 11 aufgelegt werden. Die Bewegung des unteren Förderbandes 1.1 steuert eine Antriebsrolle 1.11 auf seiten des Auflegestation ALS. Am Ausgang der Heiz-Preßzone HPZ auf seiten der Abnahmestation ANS wird das untere Förderband 1.1 über eine Umkehrrolle 1.12 nach unten und zurück zur Antriebsrolle 1.11 über weitere Umlenkrollen 1.13 umgelenkt. Das obere Förderband 1.2 ist in seiner Streckenlänge auf die Heiz-Preßzone HPZ beschränkt. Es weist entsprechend dem unteren Förderband 1.1 am rechten Ende eine Antriebsrolle 1.21 und am linken Ende eine Umkehrrolle 1.22 auf, über die hinweg und über weitere Umlenkrollen 1.23 das obere Förderband zur Antriebsrolle 1.21 zurückgeführt wird.

Die auf das untere Förderband 1.1 im Bereich der Auflegestation ALS aufgelegten Werkstücke 11 werden auf der Eingangsseite der Heiz-Preßzone HPZ von oben her vom oberen Förderband 1.2 abgedeckt und laufen dann durch eine erste Heizzone 3, die aus zwei einander gegenüberliegenden Heizkästen, nämlich einem unteren Heizkasten 3.1 und einem oberen Heizkasten 3.2 mit sinusförmig gekrümmter Heizoberfläche bestehen. An die erste Heizzone 3 schließt sich links eine zweite gleichgestaltete Heizzone 4 mit einem unteren Heizkasten 4.1 und einem oberen Heizkasten 4.2 an. Zwischen den beiden Heizzonen 3 und 4 befindet sich ein Vorpreßwalzenpaar 5 und auf der Ausgangsseite der Heizzone 4 das Hauptpreßwalzenpaar 6 Mit Hilfe des Hauptpreßwalzenpaares werden die nun ausreichend zwischen den beiden Förderbändern erwärmten Werkstücke durch den zwischen ihnen vorgesehenen Schmelzkleber miteinander verklebt.

Die zweite Förderbandanordnung 2, die sich im Bereich der Abnahmestation ANS befindet, schließt unmittelbar an die erste Förderbandanordnung 1 an und besteht ihrerseits aus einem unteren Förderband 2.1 und einem oberen Förderband 2.2. Während sich das untere Förderband 2.1 über die gesamte Länge der Abnahmestation ANS erstreckt, ist die Länge des oberen Förderbandes 2.2 auf die Länge der Kühlzone KZ beschränkt. Beide Förderbänder sind auf seiten der Heiz-Preßzone HPZ über Umkehrrollen 2.12 bzw. 2.22 und am gegenüberliegenden Ende der sie jeweils darstellenden Förderstrecke über eine Antriebsrolle 2.11 bzw. 2.21 geführt. Die Kühlzone KZ besteht im wesentlichen aus einer sich im Bereich des unteren Förderbandes 2.1 befindlichen Kühlplatte 7, auf der das untere Förderband entlanggleitet Gegebenenfalls kann auch im Bereich des oberen Förderbandes 2.2 eine weitere Kühlplatte 7 vorgesehen sein.

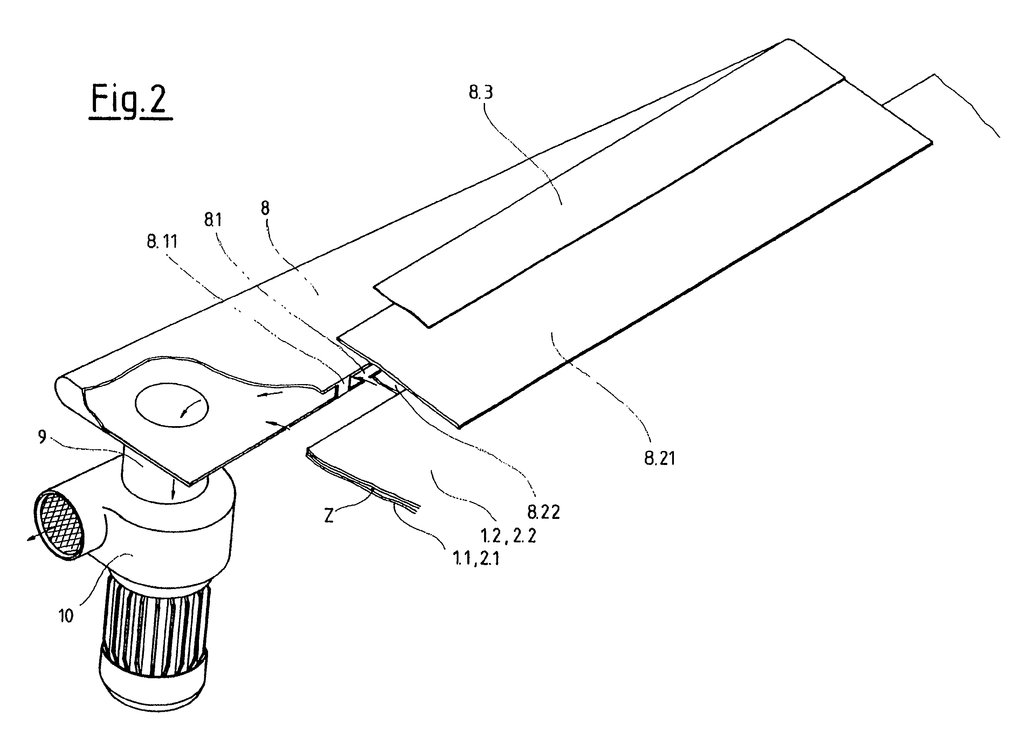

Um im Zwischenraum zwischen den beiden Förderbändern entweder der ersten Förderbandanordnung 1 bzw. der zweiten Förderbandanordnung 2 oder aber im Bereich beider Förderbandanordnungen 1 und 2 ein Teilvakuum herbeizuführen, ist, wie die perspektivische Teildarstellung nach Fig. 2 zeigt, wenigstens auf einer Seite der Förderbänder 1.1/1.2, 2.1/2.2 eine ihrem Verlauf angepaßte rinnenförmige Absaugdüse 8 vorgesehen. Die rinnenförmige Absaugdüse 8 hat am rechten Ende die größte Breite und ist hier über ein Luftanschlußrohr 9 mit einer Absaugturbine 10 verbunden. Zweckmäßig besteht die Absaugdüse 8 aus einem U-förmig gebogenen Blechteil, das mit Stützstegen 8.11 im Bereich seiner schlitzförmigen Saugöffnung 8.1 versehen ist.

Die Absaugdüse 8, die mit ihrer schlitzförmigen Saugöffnung 8.1, parallel zu den Förderbändern ausgerichtet ist, ist an der Ober- und an der Unterseite jeweils mit einer über die Saugöffnung 8.1 überstehenden elastischen Dichtleiste 8.21 bzw. 8.22 ausgerüstet. Diese Dichtleisten sind jeweils mittels eines Klebestreifen 8.3 an der Ober- und Unterseite der rinnenförmigen Absaugdüse 8 befestigt. Mit diesen Dichtleisten umfaßt die Absaugdüse 8 die beiden übereinander angeordneten Förderbänder, die hierbei sozusagen zwischen den Dichtleisten 8.21 und 8.22 mit ihrem nahen Rand gleiten. Durch den damit hergestellten dichtenden Anschluß der Absaugdüse 8 zum Zwischenraum Z der übereinander angeordneten Förderbänder 1.1/1.2 bzw. 2.1/2.2 läßt sich so auf einfache Weise das für das Absaugen der in den Werkstücken vorhandenen unerwünschten Dampf- und Lufteinschlüsse erforderliche Teilvakuum im Zwischenraum Z erzeugen. Mitunter reicht es bereits aus, wenn die übereinander angeordneten Förderbänder lediglich auf einer Seite an eine Absaugdüse angeschlossen sind, um unerwünschte Luft- und Dampfeinschlüsse in den miteinander zu verklebenden Werkstücken zu verhindern.

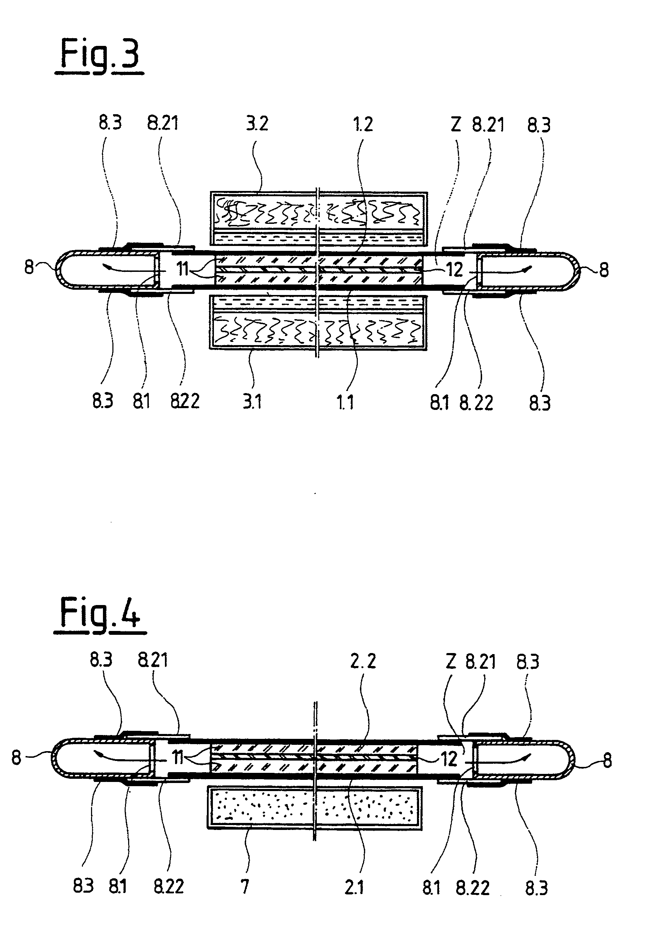

In den in Fig. 1 angegebenen Schnitten III/III und IV/IV, die in den Fig. 3 und 4 dargestellt sind, ist auf jeder Seite der übereinander angeordneten Förderbänder 1.1/1.2 bzw. 2.1/2.2 jeweils eine Absaugdüse 8 vorgesehen, zwischen deren Dichtleisten 8.21 und 8.22 die übereinander angeordneten Förderbänder randseitig gleiten. Der in den Fig. 3 und 4 zwischen den Werkstücken 11 erkennbare Schmelzkleber ist mit 12 bezeichnet.

Die Dichtleisten 8.21/8.22 müssen hinschtlich der Förderbänder, auf denen sie gleiten, gute Gleiteigenschaften aufweisen. Zweckmäßig bestehen sie wie dei Beschichtung der Förderbänder aus Teflon.

Der im Zwischenraum Z zu erzeugende notwendige Unterdruck ist abhängig einerseits von der Materialart der miteinander zu verklebenden Werkstücke wie auch von der Anzahl der übereinander angeordneten Werkstücke. Um hier jeweils optimale Bedingungen herbeiführen zu können, ist es zweckmäßig, die Leistung der Absaugturbine 10 regelbar zu gestalten.

Nur der Vollständigkeit halber wird noch darauf hingewiesen, daß die Verwendung der in den Fig. 2 bis 4 dargestellten rinnenförmigen Absaugdüse mit Dichtleisten, zwischen denen die übereinander angeordneten Förderbänder randseitig gleiten, nicht auf Anordnungen beschränkt ist, die von einer kontinuierlichen Arbeitsweise Gebrauch machen. Die Absaugeinrichtung läßt sich in gleicher Weise bei Anordnungen einsetzen, die diskontinuierlich arbeiten.

Mit gleich gutem Erfolg läßt sich die Absaugeinrichtung bei kontinuierlich arbeitenden Anordnungen entsprechend Fig. 1 auch dann einsetzen, wenn anstelle von Werkstücken in Form von Zuschnitten Rollenware miteinander verklebt bzw. kaschiert werden soll.

Bei der in Fig. 1 schematisch dargestellten Anordnung ist die Bandfördereinrichtung in zwei Förderbandanordnungen unterteilt. Hierbei ist die erste Förderbandanordnung 1 primär der Heiz-Preßzone HPZ und die zweite Förderbandanordnung 2 primär der Kühlzone KZ zugeordnet. Diese Unterteilung der Förderbandeinrichtung ist natürlich nicht zwingend. Mitunter ist es sinnvoll, die Bandfördereinrichtung mit zwei sich über die Gesamtanordnung erstreckenden übereinander angeordneten Förderbändern zu realisieren. Das untere Förderband bildet dabei eine Förderstrecke vom Eingang der Auflegestation ALS über die Heiz-Preßzone HPZ bis zum Ausgang der Abnahmestation ANS, während das obere Förderband in seiner Erstreckung lediglich auf den Bereich der Heiz-Preßzone HPZ und den Bereich der Kühlzone KZ beschränkt ist.

## Patentansprüche

1. Verfahren zum gegenseitigen Verkleben von flächenförmigen Werkstücken wie Textilien, Schaumstoffe, Kunststofffolien u.dgl., bei dem wenigstens zwei gleichzeitig miteinander zu verklebende Werkstücke, die unter Verwendung eines Klebers als Zwischenschicht zwischen zwei Förderbändern verfahrbar übereinander abgelegt sind, zunächst bis zum Schmelzen des Klebers, gegebenenfalls in Verbindung mit einem Vorpreßvorgang, erwärmt, sodann mit Abschluß des Erwärmungsvorganges einem die gegenseitige Verklebung der Werkstücke herbeiführenden Preßvorgang unterzogen und schließlich abgekühlt werden, dadurch gekennzeichnet, daß zumindest während eines der Verfahrensschritte, Erwärmen, Pressen, Abkühlen in dem die Werkstücke (11) enthaltenden Zwischenraum (Z) zwischen den beiden Förderbändern (1.1/1.2, 2.1/2.2) durch Absaugen der Zwischenraumluft ein Teilvakuum erzeugt wird.

2. Verfahren nach Anspruch 1 bei kontinuierlichem Betrieb der Förderbänder, dadurch gekennzeichnet, daß das Absaugen der Zwischenraumluft entweder während der Aufheizphase oder der Kühlphase oder aber sowohl während der Aufheizphase und der Kühlphase des Werkstück-Fixier- bzw. -Kaschiervorgangs vorgenommen wird.

3. Verfahren nach Anspruch 1 bei diskontinuierlichem Betrieb der Förderbänder, dadurch gekennzeichnet, daß das Absaugen der Zwischenraumluft entweder während der Aufheiz- und Preßphase oder der Kühlphase oder aber sowohl während der Aufheiz- und Preßphase und der Kühlphase vorgenommen wird.

4. Verfahren nach einem der vorhergehenden Ansprüche, dadurch gekennzeichnet, daß die Luft aus dem auf beiden Seiten der übereinander angeordneten Förderbänder (1.1/1.2, 2.1/2.2) offenen Zwischenraum (Z) wenigstens auf einer Seite abgesaugt wird.

5. Anordnung zur Durchführung des Verfahrens nach einem der vorhergehenden Ansprüche, bestehend aus einer Fixier- bzw. Kaschiervorrichtung, einer eingangsseitigen Auflegestation für die miteinander zu verklebenden Werkstücke, einer der Verklebung der Werkstücke dienenden Heiz-Preßzone, einer ausgangsseitigen, gegebenenfalls zu einer Kühlzone erweiterten Abnahmestation für die miteinander verklebten Werkstücke sowie einer die Werkstücke von der Auflegestation durch die Heiz-Preßzone hindurch zur Abnahmestation transportierenden Bandfördereinrichtung, die im Bereich der Heiz-Preßzone und gegebenenfalls im Bereich der zu einer Kühlzone erweiterten Abnahmestation aus zwei übereinander angeordneten, die miteinander zu verklebenden Werkstücke zwischen sich aufnehmenden luftundurchlässigen Förderbändern besteht, dadurch gekennzeichnet, daß wenigstens auf einer Seite der übereinander angeordneten Förderbänder (1.1/1.2, 2.1/2.2) in hierzu paralleler Anordnung entweder über die Länge der Heiz-Preßzone (HPZ) oder der Kühlzone (KZ) oder aber sowohl über die Länge der Heiz-Preßzone und der Kühlzone eine mit einer Luftabsaugeinrichtung verbundene rinnenförmige Absaugdüse (8) vorgesehen ist und daß die schlitzförmige Saugöffnung (8.1) der Absaugdüse in ihrer Erstreckung entlang der Förderbänder mit elastischen Dichtleisten (8.21, 8.22) besetzt ist, mit denen sie die beiden übereinander angeordneten Förderbänder von der Seite im Sinne eines dichtenden Anschlusses der Absaugdüse an den die Förderbänder von oben und unten begrenzenden Zwischenraum (Z) umfassen.

6. Anordnung nach Anspruch 5, dadurch gekennzeichnet, daß die Förderbänder (1.1/1.2, 2.1/2.2) der Bandfördereinrichtung teflonbeschichtete Glas- oder Kevlargewebebänder sind und daß die Dichtleisten (8.21, 8.22) der Absaugdüse (8) entweder aus Teflon oder teflonbeschichtetem Gewebe oder aber aus einem elastischen Material bestehen das ausreichend gute Gleiteigenschaften zu Teflon besitzt.

7. Anordnung nach Anspruch 5 oder 6, dadurch gekennzeichnet, daß die rinnenförmige Absaugdüse (8) mit Stützstegen (8.11) versehen ist, die zwischen den Schenkeln ihres U-förmigen Rinnenquerschnitts wenigstens im Bereich der freien Schenkelenden angeordnet sind und diese miteinander verbinden.

8. Anordnung nach einem der Ansprüche 5 bis 7, dadurch gekennzeichnet, daß die Luftabsaugeinrichtung über ein Luftanschlußrohr (9) mit der rinnenförmigen Absaugdüse (8) an deren einem Rinnenende in Verbindung steht und daß die Länge des U-förmigen Rinnenquerschnitts der Absaugdüse, ausgehend von diesem Rinnenende zum anderen Rinnenende hin gleichmäßig abnimmt.

9. Anordnung nach einem der Ansprüche 5 bis 8, dadurch gekennzeichnet, daß die Luftabsaugeinrichtung, beispielsweise eine Absaugturbine (10), in ihrer Leistung regelbar ist.

## Claims

1. A process for gluing together planar workpieces, such as textiles, foams, plastic sheets and the like, wherein at least two workpieces which are to be simultaneously glued to one another and which, using an adhesive as intermediate layer, are deposited one above another so as to be transportable between two conveyor belts, are firstly heated until the adhesive melts, possibly in association with a pre-pressing process, whereupon, on the conclusion of the heating process, they are subjected to a pressing process which causes the workpieces to adhere to one another, and are finally cooled, characterised in that at least during one of the process steps of heating, pressing and cooling, a partial vacuum is created in the space (Z) which is present between the two conveyor belts (1.1/1.2, 2.1/2.2) and which contains the workpieces (11), by removing the air in this space by suction.

2. A process as claimed in Claim 1 with continuous operation of the conveyor belts, characterised in that the removal by suction of the air in the space takes place either during the heating phase or the cooling phase or however both during the heating phase and the cooling phase of the workpiece fixing or laminating process.

3. A process as claimed in Claim 1 with discontinuous operation of the conveyor belts, characterised in that the removal by suction of the air in the space takes place either during the heating and pressing phase or the cooling phase or however both during the heating and pressing phase and the cooling phase.

4. A process as claimed in one of the preceding claims, characterised in that the air is removed by suction at least on one side from the space (Z) which is open on both sides of the conveyor belts (1.1/1.2, 2.1/2.2) arranged one above another.

5. An arrangement for implementing the process claimed in one of the preceding claims, comprising a fixing or laminating device, an input-end feed station for the workpieces which are to be glued to one another, a heating-pressing zone which serves to glue the workpieces to one another, an output-end receiving station, possibly extended to form a cooling zone, for the workpieces which have been glued to one another, and a belt conveyor device which transports the workpieces from the feed station through the heating-pressing zone to the receiving station and which, in the region of the heating-pressing zone and possibly in the region of the receiving station, extended to form a cooling zone, consists of two conveyor belts which are arranged one above another, are impermeable to air, and accommodate between themselves the workpieces which are to be glued to one another, characterised in that a channel-shaped suction nozzle (8) which is connected to an air suction device, is arranged at least on one side of the conveyor belts (1.1/1.2, 2.1/2.2), arranged one above another, in parallel thereto either along the length of the heating-pressing zone (HPZ) or the cooling zone (KZ) or however both along the length of the heating-pressing zone and the cooling zone, and that the slot/shaped suction opening (8.1) of the suction nozzle extending along the conveyor belts is equipped with elastic sealing strips (8.21, 8.22) with which said suction nozzle laterally embraces the two conveyor belts, arranged one above another, in the manner of a sealing connection between the suction nozzle and the space (Z) which constitutes the upper and lower boundaries of the conveyor belts.

6. An arrangement as claimed in Claim 5, characterised in that the conveyor belts (1.1/1.2, 2.1/2.2) of the belt conveyor device are Teflon-coated glass or Kevlar fabric belts and that the sealing strips (8.21, 8.22) of the suction nozzle (8) consist either of Teflon or of Teflon-coated fabric or however of an elastic material which possesses sliding properties as good as Teflon.

7. An arrangement as claimed in Claim 5 or 6, characterised in that the channel-shaped suction nozzle (8) comprises support webs (8.11) which extend between the flanks of its U-shaped channel cross-section at least in the region of the free flank ends and connect these to one another.

8. An arrangement as claimed in one of Claims 5 to 7, characterised in that the air suction device is connected via an air connection pipe (9) to the channel-shaped suction nozzle (8) at one channel end thereof, and that the length of the U-shaped channel cross-section of the suction nozzle reduces uniformly from this end of the channel towards the other end.

9. An arrangement as claimed in one of Claims 5 to 8, characterised in that the air suction device, for example a suction turbine (10), is adjustable in respect of its power.

## Revendications

1. Procédé pour coller entre elles des pièces planes, telles que des textiles, des matériaux mousses, des matières plastiques et analogues, et selon lequel on chauffe au moins deux pièces devant être simultanément collées l'une à l'autre et qui sont superposées moyennant l'insertion d'une couche intercalaire de colle, de manière à être déplaçables entre deux bandes convoyeuses, tout d'abord jusqu'à la fusion de la colle, éventuellement en liaison avec une opération de pressage préalable, puis on les soumet, à la fin de l'opération de chauffage, à une opération de pressage conduisant au collage réciproque des pièces, et finalement on les refroidit, caractérisé en ce qu'au moins pendant l'une des étapes opératoires de chauffage, pressage, refroidissement, on établit un vide partiel dans l'espace intercalaire (Z) qui contient les pièces (11) et est situé entre les deux bandes convoyeuses (1.1/1.2, 2.1/2.2), par aspiration de l'air contenu dans l'espace intercalaire.

2. Procédé suivant la revendication 1, mis en oeuvre avec un fonctionnement continu des bandes convoyeuses, caractérisé par le fait que l'aspiration de l'air contenu dans l'espace intercalaire est exécutée soit pendant la phase de chauffage, soit pendant la phase de refroidissement, soit aussi bien pendant la phase de chauffage que pendant la phase de refroidissement de l'opération de fixation ou de doublage des pièces.

3. Procédé suivant la revendication 1 mis en oeuvre avec un fonctionnement discontinu de la bande convoyeuse, caractérisé par le fait que l'aspiration de l'air de l'espace intercalaire est réalisée soit pendant la phase de chauffage et de pressage, soit pendant la phase de refroidissement, soit aussi bien pendant la phase de chauffage et de pressage que pendant la phase de refroidissement.

4. Procédé suivant l'une des revendications précédentes, caractérisé par le fait que l'air est aspiré au moins d'un côté à partir de l'espace intercalaire (Z) ouvert des deux côtés des bandes convoyeuses superposées (1.1/1.2, 2.1/2.2).

5. Dispositif pour la mise en oeuvre du procédé suivant l'une des revendications précédentes, constitué par un dispositif de fixage et de doublage, un poste, situé côté entrée, de dépôt des pièces accolées l'une à l'autre, une zone de chauffage-pressage utilisée pour coller les pièces, un poste de prélèvement situé côté sortie, qui est éventuellement étendu à une zone de refroidissement, pour le prélèvement des pièces collées entre elles, ainsi qu'un dispositif à bandes convoyeuses, qui transporte les pièces depuis le poste de dépôt à travers la zone de surface-pressage jusqu'au poste de prélèvement et est constitué, au niveau de la zone de chauffage-pressage et éventuellement dans la zone du poste de prélèvement étendue à une zone de refroidissement, par deux bandes convoyeuses superposées, imperméables à l'air et recevant entre elles les pièces devant être réunies par collage, caractérisé par le fait qu'il est prévu, au moins sur un côté des bandes convoyeuses superposées (1.1/1.2, 2.1/2.2), parallèlement à ces bandes, et ce soit sur la longueur de la zone de chauffage-pressage (HPZ), soit sur la longueur de la zone de refroidissement (KZ), soit aussi bien sur la longueur de la zone de chauffage-pressage et que sur la longueur de la zone de refroidissement, une buse d'aspiration (8) en forme de gouttière, raccordée à un dispositif d'aspiration de l'air, et que l'ouverture d'aspiration en forme de fente (8.1) de la pièce d'aspiration comporte, sur son étendue le long des bandes convoyeuses, des barrettes élastiques d'étanchéité (8.21, 8.22), à l'aide desquelles cette ouverture entoure latéralement les deux bandes convoyeuses superposées dans le sens d'un raccordement étanche de la buse d'aspiration à l'espace intercalaire (Z) qui est délimité à sa partie supérieure et à sa partie inférieure par les bandes convoyeuses.

6. Dispositif suivant la revendication 5, caractérisé par le fait que les bandes convoyeuses (1.1/1.2, 2.1/2.2) du dispositif à bandes convoyeuses sont des bandes formées d'un tissu de verre ou de Kevlar recouvertes de Téflon et que les barrettes d'étanchéité (8.21, 8.22) de la buse d'aspiration (8) sont constituées soit en Téflon, soit en un tissu recouvert de Téflon, soit en un matériau élastique possédant des propriétés suffisamment bonnes de glissement pour le Téflon.

7. Dispositif suivant la revendication 5 ou 6, caractérisé par le fait que la buse d'aspiration (8) en forme de gouttière comporte des barrettes d'appui (8.11), qui sont disposées entre les branches de la section transversale en forme de U de la gouttière, au moins dans la zone des extrémités libres des branches et relient entre elles ces dernières.

8. Dispositif suivant l'une des revendications 5 à 7, caractérisé par le fait que le dispositif d'aspiration d'air est raccordé, par l'intermédiaire d'un tube de raccordement d'air (9), à une extrémité de la buse d'aspiration (8) en forme de gouttière, et que la longueur de la section transversale en forme de U de la gouttière de la buse d'aspiration, diminue de façon uniforme de cette extrémité jusqu'à l'autre extrémité de la gouttière.

9. Dispositif suivant l'une des revendications 5 à 8, caractérisé par le fait que la puissance du dispositif d'aspiration d'air, par exemple une turbine d'aspiration (10), est réglable.

# Fig.1

2.11  2.21  2.2  2.22  1.22  6  1.2  4.2  5  3.2  1.23  1.21  11

IV

IV

2

BFE

4  1  3

2.1  7  2.12  1.12  1.1  4.1  3.1  1.13  1.11

III

III

KZ

ANS  HPZ  ALS

8

EP 0 344 765 B1

Fig.2

EP 0 344 765 B1

## Fig.3

8.3    8.21         3.2         1.2         Z  8.21    8.3

8 ⌇                11                            12                ⌇ 8

8.3  8.1  8.22      3.1         1.1         8.1  8.22    8.3

## Fig.4

8.3   8.21                    2.2       Z  8.21   8.3

8 ⌇              11                         12            ⌇ 8

8.3  8.1   8.22      7          2.1      8.1  8.22    8.3